# FASCICULE DE BREVET EUROPEEN

(11) **EP 3 172 474 B1**
(45) Date de publication et mention de la délivrance du brevet: **10.04.2019**
(21) Numéro de dépôt: 15739577.3
(22) Date de dépôt: 20.07.2015
(51) Int. Cl.: F16L 51/00, F16L 27/12, H02G 5/00, H02G 5/06

(54) **JOINT DE DILATATION POUR GAINE D'ISOLATION AU GAZ AVEC REPRISE D'EFFET DE FOND**
DEHNUNGSFUGE FÜR EINE GASISOLIERTE HÜLLE MIT ENDLASTAUSGLEICH
EXPANSION JOINT FOR A GAS-INSULATED SHEATH WITH END LOAD COMPENSATION

(30) Priorité: 22.07.2014 FR 1457068
(43) Date de publication de la demande: 31.05.2017
(73) Titulaire: General Electric Technology GmbH, 5400 Baden (CH)
(72) Inventeur: BERNARD, Mathieu, 73100 Gresy Sur Aix (FR); GIUSTI, Alexandre, 73410 La Biolle (FR)
(74) Mandataire: Fischer, Michael Maria
(86) Numéro de dépôt international: PCT/EP2015/066517
(87) Numéro de publication internationale: WO 2016/012388

(56) Documents cités:
- DE-A1- 2 204 015
- DE-A1- 3 310 162
- US-A- 2 373 280
- US-A1- 2002 158 464

## Description

### DOMAINE TECHNIQUE

L'invention concerne le domaine des lignes et équipements électriques sous haute ou très haute tension qui sont blindés en étant isolés au gaz. De telles installations sont connues sous l'acronyme anglo-saxon GIS (Gas Insulated Station) signifiant station isolée au gaz.

### ÉTAT DE LA TECHNIQUE ANTÉRIEURE

De telles installations comportent typiquement des barres électriquement conductrices qui sont isolées de l'environnement extérieur par un gaz isolant pressurisé tel que le SF6.

Chaque barre conductrice est entourée par une gaine isolante métallique en forme de conduite tubulaire, typiquement en aluminium, qui est étanche et qui renferme le gaz isolant.

En cas de ligne blindée de longueur importante, il est nécessaire de compenser les dilatations thermiques auxquelles l'enveloppe est soumise, et qui font varier sa longueur.

Concrètement, une telle ligne est portée par des structures qui supportent son poids, et pour éviter que ces structures aient à contrecarrer les efforts résultant de la dilatation thermique de l'enveloppe, cette enveloppe comporte un ou plusieurs joints de dilatation.

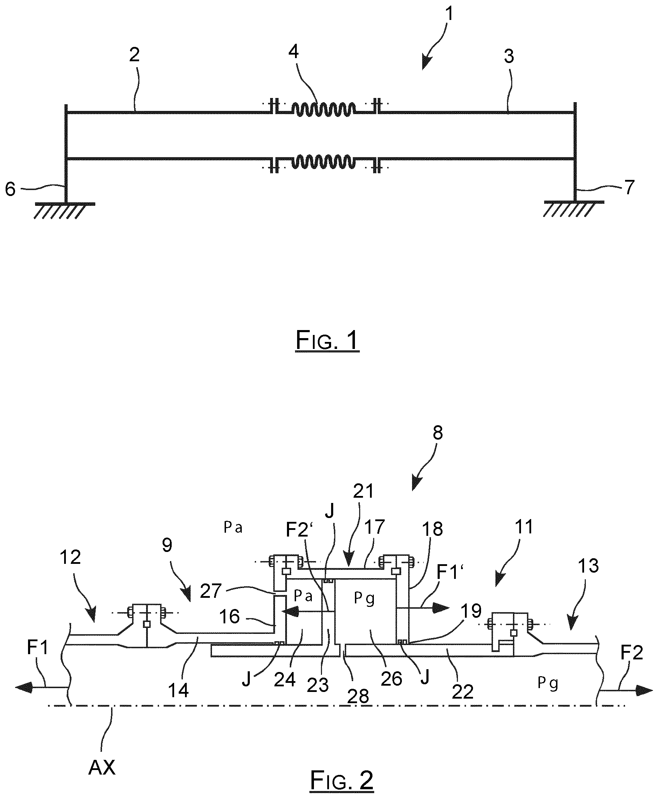

Un tel joint de dilatation est représenté schématiquement dans la figure 1 qui montre une enveloppe de ligne blindée 1 comportant un premier et un deuxième tronçon 2 et 3 raccordés l'un à l'autre par un tel joint de dilatation qui est repéré par 4.

Le premier tronçon 2 est porté par une première structure 6 à laquelle il est rigidement solidarisé, et le second tronçon 3 est porté par une autre structure 7 à laquelle ce second tronçon est lui aussi rigidement solidarisé, ces deux structures étant distinctes et indépendantes.

Le joint de dilatation 4 est ici un joint à soufflet : en cas de dilatation du premier et du second tronçon sous l'effet de la température, ces tronçons s'allongent et le soufflet 4 se contracte pour compenser cet allongement, de sorte que la longueur totale de la conduite reste sensiblement constante.

Néanmoins, le gaz isolant que renferme l'enveloppe de la figure 1 est pressurisé, c'est-à-dire qu'il est à une pression supérieure à la pression atmosphérique. Ce gaz tend ainsi à déployer le soufflet, c'est-à-dire à écarter l'un de l'autre les tronçons 2 et 3.

Autrement dit, du fait de la pressurisation du gaz isolant, et malgré la présence du soufflet 4, les tronçons 2 et 3 sont soumis à des efforts tendant à les écarter l'un de l'autre. L'intensité est conditionnée par la section des tronçons et par la pression régnant à l'intérieur de l'enveloppe.

Ce phénomène qui est habituellement dénommé effet de fond est pénalisant sur ce type d'installation du fait qu'il conduit à surdimensionner les éléments de structure porteuse. Ces éléments structuraux qui constituent des points d'ancrage de la ligne doivent ainsi reprendre les efforts dus à l'effet de fond, en plus de supporter le poids de l'installation, ce qui accroît le coût d'une telle installation.

Ceci est d'autant plus pénalisant que de telles lignes isolées peuvent être situées à des hauteurs pouvant atteindre six mètres, ce qui accentue encore les difficultés de conception et de fabrication de telles structures d'ancrage.

D'une manière générale, il n'existe pas de solution réellement appropriée pour compenser l'effet de fond sur une telle installation, l'agencement proposé par le document US2373280 ne permettant pas une compensation appropriée.

### EXPOSÉ DE L'INVENTION

L'invention concerne un joint de dilatation pour gaine d'isolation électrique sous gaz pressurisé, ce joint comportant deux parties coulissant l'une dans l'autre et destinées à être raccordées chacune à un tronçon de gaine :
- la première partie comprenant une première conduite prolongée par un évasement suivi d'une virole et d'une restriction ayant une ouverture centrale au droit de la conduite, pour délimiter une cavité, la virole ayant en section transversale une aire valant le double de l'aire de la section de la première conduite ;
- la seconde partie comprenant une seconde conduite engagée dans l'ouverture et dans la première conduite, avec un flasque entourant cette seconde conduite et s'étendant dans la cavité pour la partager en une première moitié et une deuxième moitiés ;

- un premier orifice traversant l'évasement pour mettre la première moitié de cavité à la pression extérieure et un second orifice traversant la seconde conduite pour pressuriser la deuxième moitié de cavité par mise en communication avec l'intérieur de la gaine ;
- des moyens assurant une liaison étanche entre l'ouverture et la seconde conduite ; entre le flasque et la face interne de la virole ; entre la seconde conduite et la première conduite.

Avec cette solution, les deux parties du joint de dilatation coulissent pour compenser la dilatation thermique, et la pressurisation de la deuxième moitié de cavité permet de contrer l'effet de fond.

L'invention concerne également un joint tel que défini ci-dessus, dans lequel la restriction est fixée à la virole de manière amovible par boulonnage.

L'invention concerne également un joint tel que défini ci-dessus, dans lequel les moyens d'étanchéité comportent au moins un joint torique porté par l'ouverture et/ou au moins un joint torique porté par le flasque et/ou au moins un joint torique porté par la première conduite.

L'invention concerne également un joint tel que défini ci-dessus, dans lequel l'évasement est formé par un flasque en forme de couronne plane, et/ou dans lequel la restriction est formée par un flasque en forme de couronne plane.

### BRÈVE DESCRIPTION DES DESSINS

La figure 1, déjà décrite est une vue latérale d'une installation de l'Etat de la technique ;
La figure 2 est une représentation schématique en coupe latérale de la moitié supérieure d'une gaine équipée du joint selon l'invention en position médiane ;
La figure 3 est une représentation schématique en coupe latérale de la moitié supérieure d'une gaine équipée du joint selon l'invention lorsqu'il est déployé ;
La figure 4 est une représentation schématique en coupe latérale de la moitié supérieure d'une gaine équipée du joint selon l'invention lorsqu'il est rétracté.

### EXPOSÉ DÉTAILLÉ DE MODES DE RÉALISATION PARTICULIERS

Comme visible dans la figure 2, le joint de dilatation selon l'invention qui est repéré par 8, comporte une première partie 9, à gauche sur les figures, et une deuxième partie 11 située à droite sur les figures.

La première partie 9 est raccordée et rigidement solidarisée à un premier tronçon d'enveloppe 12, et d'une manière analogue, la seconde partie 11 est raccordée et rigidement solidarisée à un second tronçon d'enveloppe 13. Ces raccordements sont étanches, du type à brides boulonnées.

L'ensemble formé par le premier tronçon 12 prolongé par le joint 8 lui-même prolongé par le second tronçon 13 s'étend de manière rectiligne le long d'un axe ici repéré par AX, et qui constitue également un axe de révolution pour cet ensemble.

La première partie 9 du joint de dilatation 8 selon l'invention comporte une portion de conduite 14, qui est ici tubulaire, dont l'extrémité libre est prolongée par un évasement 16 raccordé à une virole cylindrique 17 elle-même prolongée par une restriction 18 dans laquelle est formée une ouverture circulaire 19.

L'évasement 16 et la restriction 18 sont ici formés par des flasques plans en forme de couronnes s'étendant perpendiculairement à l'axe AX.

Le bord interne circulaire du flasque 16 a sensiblement le même diamètre que la conduite 14 auquel il est rigidement solidarisé, par exemple par soudage, et le bord externe de ce flasque 16 a un diamètre correspondant sensiblement au diamètre de la virole cylindrique 17 auquel il est fixé de manière étanche par boulonnage.

Le flasque 18 a globalement la même forme de couronne et les mêmes dimensions que le flasque 16, en ayant son bord externe boulonné à l'autre bord de la virole cylindrique 17. Le bord interne 19 du flasque 18 constitue l'ouverture de la première partie 9 du joint 8.

Cette ouverture 19 est circulaire, son diamètre correspond au diamètre interne de la conduite 14, et elle est située dans le prolongement de la conduite 14. Autrement dit, la projection de la surface interne cylindrique de la conduite 14 sur le flanc 18 correspond au contour de l'ouverture 19 de ce flanc.

L'évasement et la restriction que forment conjointement le flasque 16 avec la virole 17 et le flasque 18 délimitent conjointement une cavité annulaire 21, de section constante le long de l'axe de révolution AX.

La section transversale de la première partie 9 du joint 8, au niveau de la cavité torique 21 a une aire qui correspond au double de l'aire que présente la conduite 14 dans sa section transversale. Dans l'exemple des figures où la virole et la conduite sont cylindriques, le diamètre de la virole 17 vaut donc le diamètre de la conduite 14 multiplié par la racine carrée du nombre deux.

La deuxième partie 11 du joint de dilatation 8 selon l'invention comporte une deuxième conduite 22, également tubulaire, dont le diamètre externe correspond au diamètre interne de la première conduite 14 et au diamètre de l'ouverture 19 qui sont identiques.

Cette deuxième conduite 22 est enfilée dans la première partie 9 du joint 8 dont elle traverse l'ouverture 19 tout en ayant son extrémité libre engagée dans la première conduite 14.

Cette deuxième conduite 22 est elle aussi pourvue d'un plateau ou flasque 23 en forme de couronne qui l'entoure en étant rigidement solidarisé à cette deuxième conduite 22, par exemple au moyen d'une soudure solidarisant le bord interne circulaire du flasque 23 avec la face externe cylindrique de la conduite 22.

Ce flasque 23 qui s'étend perpendiculairement à l'axe AX présente un contour externe circulaire de même diamètre que le diamètre interne de la virole 17, et il est situé dans la cavité annulaire 21 qu'il sépare en deux moitiés distinctes 24 et 26 ne communiquant pas l'une avec l'autre.

La deuxième partie 11 est ainsi engagée dans la première partie 9 en étant mobile longitudinalement le long de l'axe AX par rapport à cette première partie 9 sur une course correspondant sensiblement à la longueur de la virole 17.

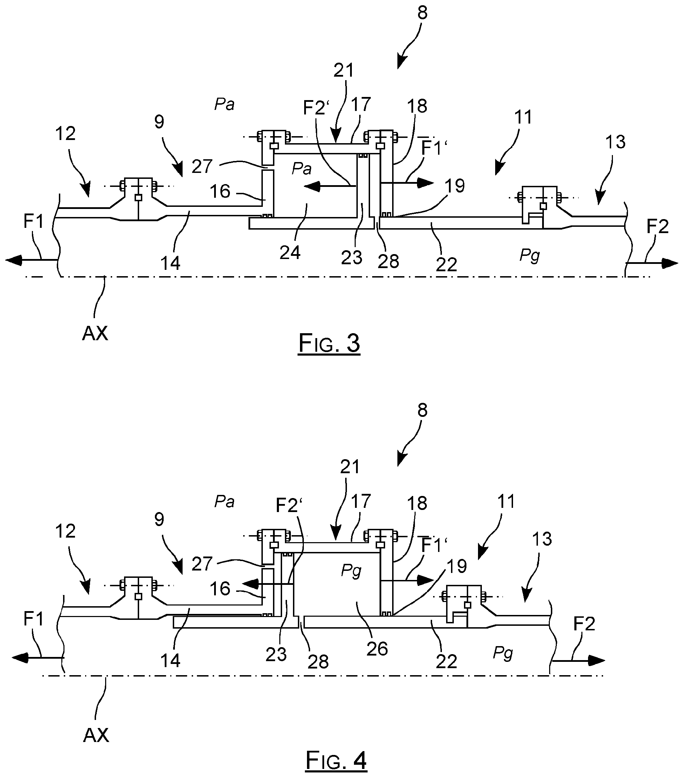

Cette mobilité permet ainsi au joint 8 de se contracter, comme dans la figure 3 ou de se déployer, comme dans la figure 4, pour compenser les fluctuations de longueur du premier et du deuxième tronçon 12 et 13 de la gaine qui sont dues aux variations de température.

Quelle que soit la situation du joint, qu'il soit complètement déployé ou complètement rétracté, le flasque 23 est à l'intérieur de la cavité annulaire 21, et l'extrémité libre de la seconde conduite 22 reste engagée dans la première conduite 14.

Le joint de dilatation 8 selon l'invention comporte encore un premier orifice 27 qui traverse le flasque 16 et par lequel la première moitié 24 de la cavité 21 est en communication avec l'extérieur pour être à la pression atmosphérique notée Pa dans les figures.

Ce joint comporte également un deuxième orifice 28, qui traverse radialement la deuxième conduite 22, en étant situé du côté du flasque 23 qui est opposé à l'extrémité libre de cette deuxième conduite 22. Ce deuxième orifice 28 met ainsi en communication la seconde moitié 26 de la cavité avec l'intérieur de la gaine qui est à la pression du gaz isolant pressurisé notée Pg dans les figures.

Enfin, le joint de dilatation 1 selon l'invention comporte encore des éléments d'étanchéité, qui sont ici des joints toriques repérés par J dans les figures. Un joint torique j est ainsi porté par le pourtour interne de l'ouverture 19 pour assurer une étanchéité avec la face externe de la deuxième conduite 22 engagée dans cette ouverture 19. Un autre joint torique J est porté par le pourtour externe du flasque central 23 de manière à assurer une étanchéité du contact de ce bord externe avec la face interne de la virole 17.

Et enfin un autre joint torique J est porté par la première partie 9 au niveau du bord interne du flasque 16 qui est en appui sur l'extrémité libre de la deuxième conduite 22 engagée dans la première conduite 14 de manière à assurer là aussi une liaison étanche.

D'une manière générale, l'assemblage du joint d'étanchéité selon l'invention peut par exemple être assuré en boulonnant d'abord la virole 17 au flasque 16 rigidement solidaire de la première conduite 14 pour former un premier ensemble. La deuxième partie 11 du joint peut alors être engagée dans cet ensemble, en enfilant l'extrémité libre de la deuxième conduite 22 dans la première conduite 14 et le flasque 23 dans la cavité annulaire 21.

A ce stade, le flasque 18 peut être engagé autour de la seconde conduite 22 pour être rapporté contre le bord libre de la virole cylindrique 17 afin d'être fixé à cette virole 17 par boulonnage.

A ce stade, le joint de dilatation 8 selon l'invention est assemblé, et il peut être fixé aux deux tronçons d'une conduite. La fixation de la première partie 9 au premier tronçon d'enveloppe peut être assurée par brides boulonnées. La fixation de la deuxième partie 11 au deuxième tronçon 13 peut être assurée au moyen de deux demi-couronnes rapportées en extrémité libre de la deuxième conduite 22. Ces deux demi-couronnes enserrent alors l'extrémité de la conduite 22 en s'engageant radialement dans une rainure circonférentielle réalisée à la face externe de cette conduite. Une fois en place, ces deux couronnes forment conjointement un bride qui est ensuite boulonnée sur une bride correspondante du second tronçon d'enveloppe 13.

Comme indiqué plus haut, la seconde partie du joint selon l'invention est libre de coulisser par rapport à la première partie dans laquelle elle est engagée selon une course correspondant à la longueur de la cavité 21 le long de l'axe AX. Les efforts qui s'exercent dans cette course sont limités aux efforts de frottements dus aux joints d'étanchéité, de sorte qu'en fin de compte les efforts résiduels du joint de dilatation sont en fait quasiment nuls. Finalement, la raideur intrinsèque du joint selon l'invention est quasiment nulle.

Par ailleurs, de par sa conception, la pression qui règne dans la deuxième moitié 26 de la cavité 21 est la pression du gaz Pg, supérieure à la pression atmosphérique, alors que la pression qui règne dans la première moitié 24 de cavité 21 est la pression atmosphérique.

Cette répartition des pressions permet d'annuler l'effet de fond sur l'enveloppe, qui correspond à la pression interne du gaz d'isolation et qui tendrait à allonger cette enveloppe.

Plus particulièrement, le premier ensemble formé par le premier tronçon d'enveloppe 12 et la première partie 9 du joint est soumis d'une part à un effort de traction F1, dirigé vers la gauche sur les figures, et s'exerçant au niveau de l'extrémité gauche de ce premier ensemble, et d'autre part à un effort F1' de direction opposée, et qui s'exerce sur le flasque 18.

Concrètement, si A désigne l'aire de la section transversale du premier tronçon 12, A correspond alors aussi à l'aire de la surface du flasque 18, de sorte que l'on a F1 = F1' = A(Pg-Pa) avec F1 et F1' de directions opposées. Par conséquent, le premier ensemble est à l'équilibre, ce qui signifie que l'écart entre la pression interne Pg et la pression externe Pa ne produit pas d'effet de fond sur ce premier ensemble.

De la même manière, le second ensemble formé par la seconde partie 11 et le second tronçon 13 est soumis à une effort F2 s'exerçant à son extrémité droite non visible, et un effort de direction opposée F2' s'exerçant sur le flasque central 23. Comme là aussi, l'aire A de la section du second tronçon 13 est identique à l'aire du flasque central 23, on a encore F2 = F2' = = A(Pg-Pa) avec F2 et F2' de directions opposées. Le second ensemble est ainsi lui aussi en équilibre, ce qui revient à dire qu'il n'est pas sujet à un effet de fond.

Le joint de dilatation selon l'invention peut ainsi équiper une conduite ou enveloppe pour compenser conjointement les effets de la dilatation thermique sur cette enveloppe et les effets de fond sur cette enveloppe.

Il est alors possible de prévoir des structures porteuses pour cette enveloppe qui n'ont pas à être renforcées pour contrecarrer des efforts dus à la dilatation ni des efforts dus à l'effet de fond.

## Revendications

1. Joint de dilatation (1) pour gaine d'isolation électrique sous gaz pressurisé, ce joint (1) comportant deux parties (9, 11) coulissant l'une dans l'autre et destinées à être raccordées chacune à un tronçon de gaine (12, 13) :
- la première partie (9) comprenant une première conduite (14) prolongée par un évasement (16) suivi d'une virole (17) et d'une restriction (18) ayant une ouverture centrale (19) au droit de la conduite (14), pour délimiter une cavité (21) ;
- la seconde partie (11) comprenant une seconde conduite (22) engagée dans l'ouverture (19) et dans la première conduite (14), avec un flasque (23) entourant cette seconde conduite (22) et s'étendant dans la cavité (21) pour la partager en une première moitié (24) *et une deuxième moitié* (26) ;
- un premier orifice (27) traversant l'évasement (16) pour mettre la première moitié (24) de cavité à la pression extérieure (Pa) et un second orifice (28) traversant la seconde conduite (22) pour pressuriser la deuxième moitié de cavité (26) par mise en communication avec l'intérieur de la gaine ;
- des moyens assurant une liaison étanche (J) entre l'ouverture (19) et la seconde conduite (22) ; entre le flasque (23) et la face interne de la virole (17) ; entre la seconde conduite (22) et la première conduite (14) ;
**caractérisé en ce que** la virole (17) a en section transversale une aire valant le double de l'aire de la section de la première conduite (14).

2. Joint de dilatation selon la revendication 1, dans lequel la restriction (18) est fixée à la virole (17) de manière amovible par boulonnage.

3. Joint de dilatation selon la revendication 1 ou 2, dans lequel les moyens d'étanchéité comportent au moins un joint torique (J) porté par l'ouverture (19) et/ou au moins un joint torique (J) porté par le flasque (23) et/ou au moins un joint torique (J) porté par la première conduite (14).

4. Joint de dilatation selon l'une des revendications 1 à 3, dans lequel l'évasement (16) est formé par un flasque en forme de couronne plane, et/ou dans lequel la restriction (18) est formée par un flasque en forme de couronne plane.

## Patentansprüche

1. Dehnungsfuge (1) für einen unter Druckgas stehenden elektrischen Isoliermantel, wobei diese Fuge (1) zwei Teile (9, 11) umfasst, die ineinander gleiten und dazu bestimmt sind, jeder an einen Mantelabschnitt (12, 13) angeschlossen zu werden:
- wobei der erste Teil (9) eine erste Leitung (14) umfasst, die von einer Aufweitung (16), gefolgt von einer Dichtungshülse (17) und einer Verengung (18), verlängert wird, welche eine zentrale Öffnung (19) auf Höhe der Leitung (14) aufweist, um einen Hohlraum (21) zu begrenzen;
- wobei der zweite Teil (11) eine zweite Leitung (22) umfasst, die in die Öffnung (19) und in die erste Leitung (14) eingreift, mit einem Flansch (23), welcher diese zweite Leitung (22) umgibt und sich in den Hohlraum (21) erstreckt, um denselben in eine erste Hälfte (24) und eine zweite Hälfte (26) zu teilen;
- wobei eine erste Öffnung (27) durch die Aufweitung (16) hindurchgeht, um die erste Hohlraumhälfte (24) auf den Außendruck (Pa) zu bringen, und eine zweite Öffnung (28) durch die zweite Leitung (22) hindurchgeht, um die zweite Hohlraumhälfte (26) durch Inkommunikationbringen mit dem Inneren des Mantels mit Druck zu beaufschlagen;
- wobei Mittel für eine dichte Verbindung (J) zwischen der Öffnung (19) und der zweiten Leitung (22); zwischen dem Flansch (23) und der Innenfläche der Dichtungshülse (17); zwischen der zweiten Leitung (22) und der ersten Leitung (14) sorgen;
**dadurch gekennzeichnet, dass** die Dichtungshülse (17) im Querschnitt eine Fläche aufweist, die das Doppelte der Fläche des Querschnitts der ersten Leitung (14) beträgt.

2. Dehnungsfuge nach Anspruch 1, wobei die Verengung (18) durch Verschrauben abnehmbar an der Dichtungshülse (17) befestigt ist.

3. Dehnungsfuge nach Anspruch 1 oder 2, wobei die Dichtmittel mindestens einen von der Öffnung (19) getragenen O-Ring (J), und/oder mindestens einen vom Flansch (23) getragenen O-Ring (J), und/oder mindestens einen von der ersten Leitung (14) getragenen O-Ring (J) umfassen.

4. Dehnungsfuge nach einem der Ansprüche 1 bis 3, wobei die Aufweitung (16) von einem Flansch in ebener Kranzform gebildet wird, und/oder wobei die Verengung (18) von einem Flansch in ebener Kranzform gebildet wird.

## Claims

1. Expansion joint (1) for a pressurised gas electrical insulation sleeve, this joint (1) comprising two parts (9, 11) sliding into each other and intended to each be connected to a sleeve section (12, 13):
- the first part (9) comprising a first pipe (14) extended by a flare (16) followed by a ferrule (17) and a restriction (18) having a central opening (19) to the right of the pipe (14), to delimit a cavity (21);
- the second part (11) comprising a second pipe (22) inserted into the opening (19) and in the first pipe (14), with a flange (23) surrounding this second pipe (22) and extending into the cavity (21) to split it into a first half (24) and a second half (26);
- a first orifice (27) crossing the flare (16) to put the first cavity half (24) at the outside pressure (Pa) and a second orifice (28) crossing the second pipe (22) to pressurise the second cavity half (26) by communicating with the inside of the sleeve;
- means ensuring a sealed connection (J) between the opening (19) and the second pipe (22); between the flange (23) and the inner face of the ferrule (17); between the second pipe (22) and the first pipe (14);
**characterised in that** the ferrule (17) has, in the cross-section, an area equal to double the area of the section of the first pipe (14).

2. Expansion joint according to claim 1, wherein the restriction (18) is secured to the ferrule (17) so that it can be moved by bolting.

3. Expansion joint according to claim 1 or 2, wherein the sealing means comprise at least one O-ring (J) supported by the opening (19) and/or at least one O-ring (J) supported by the flange (23) and/or at least one O-ring (J) supported by the first pipe (14).

4. Expansion joint according to one of claims 1 to 3, wherein the flare (16) is formed by flange in the form of a flat crown, and/or wherein the restriction (18) is formed by a flange in the form of a flat crown.
